# EUROPEAN PATENT APPLICATION

(11) **EP 4 790 771 A1**
(43) Date of publication of application: **12.08.2026**
(21) Application number: 25222943.0
(22) Date of filing: 12.12.2025
(51) Int. Cl.: H01M 8/04089, B60L 50/72, H01M 8/04082

(54) **FUEL CELL SYSTEM AND VEHICLE**

(30) Priority: 05.02.2025 JP 2025017347
(71) Applicant: Toyota Jidosha Kabushiki Kaisha, Toyota-shi, Aichi-ken 471-8571 (JP)
(72) Inventor: AOTO, Akira, Toyota-shi, 471-8571 (JP); KOSUGI, Koki, Toyota-shi, 471-8571 (JP)
(74) Representative: TBK

(57) **Abstract**

A fuel cell system to be mounted on a vehicle includes: a fuel cell having a cathode gas supply port through which cathode gas is introduced and a cathode gas discharge port through which the used cathode gas is discharged; a first pipe made of metal and communicating with the cathode gas supply port or the cathode gas discharge port; and a second pipe made of resin and communicating with the cathode gas supply port or the cathode gas discharge port via the first pipe, the second pipe having a bent portion disposed farther from the fuel cell than the first pipe.

## Description

### BACKGROUND

### FIELD

The present disclosure relates to a fuel cell system and a vehicle.

### RELATED ART

Fuel cell systems mounted on vehicles are known (for example, Japanese Patent Application Publication No. 2002-362164).

Patent Literature 1: Japanese Patent Application Publication No. 2002-362164

In the event of a vehicle collision, a valve may malfunction even if a pipe communicating with a cathode of a fuel cell remains unbroken. In such a case, after the vehicle collision, cathode gas may be supplied to the fuel cell through the pipe, which may result in a higher voltage between terminals of the fuel cell.

### SUMMARY

The present disclosure is implementable by having the following aspects.
(1) According to a first aspect of the present disclosure, a fuel cell system to be mounted on a vehicle is provided. The fuel cell system includes: a fuel cell having a cathode gas supply port and a cathode gas discharge port, the cathode gas supply port introducing cathode gas, the cathode gas discharge port discharging the used cathode gas; a first pipe made of metal and communicating with the cathode gas supply port or the cathode gas discharge port; and a second pipe made of resin and communicating with the cathode gas supply port or the cathode gas discharge port via the first pipe, the second pipe having a bent portion disposed farther from the fuel cell than the first pipe.
   According to the fuel cell system of this aspect, the bent portion of the second pipe is damaged with high certainty by causing the bent portion to collide with a body structure member upon a vehicle collision. Thus, even if the cathode gas flows into a pipe, including the first and second pipes, from one of both ends of the pipe, which is opposite to the other end communicating with the fuel cell after the vehicle collision, the cathode gas is still allowed to flow out through a hole formed in the bent portion. Therefore, this configuration is able to prevent the cathode gas from being supplied to the fuel cell after the vehicle collision.
(2) In the fuel cell system of the above-described aspect, the first pipe may communicate with the cathode gas supply port, one end of the second pipe may communicate with the cathode gas supply port via the first pipe, and the other end of the second pipe may communicate with a compressor that pumps the cathode gas to the cathode gas supply port.
   According to the fuel cell system of this aspect, the cathode gas is allowed to flow out through the hole formed in the bent portion between the compressor and the fuel cell when the compressor is not stopped after the vehicle collision.
(3) According to a second aspect of the present disclosure, a vehicle is provided. The vehicle includes: a fuel cell having a cathode gas supply port and a cathode gas discharge port, the cathode gas supply port introducing cathode gas, the cathode gas discharge port discharging the used cathode gas; a first pipe made of metal and communicating with the cathode gas supply port or the cathode gas discharge port; a second pipe made of resin and communicating with the cathode gas supply port or the cathode gas discharge port via the first pipe, the second pipe having a bent portion disposed farther from the fuel cell than the first pipe; and a dash panel, the dash panel partitioning a front room located at a front end portion of the vehicle from a cabin located behind the front room. The fuel cell, the first pipe, and the second pipe are disposed in the front room, and the fuel cell, the first pipe, the second pipe, and the dash panel are arranged in this order along a front-back axis of the vehicle.
   According to the vehicle of this aspect, the bent portion of the second pipe is damaged with high certainty by causing the bent portion to collide with the dash panel upon a vehicle collision. Thus, even if the cathode gas flows into a pipe, including the first and second pipes, from one of both ends of the pipe, which is opposite to the other end communicating with the fuel cell after the vehicle collision, the cathode gas is still allowed to flow out through a hole formed in the bent portion. Therefore, this configuration is able to prevent the cathode gas from being supplied to the fuel cell after the vehicle collision.

### BRIEF DESCRIPTION OF THE DRAWINGS

FIG. 1 is an explanatory diagram illustrating a vehicle on which a fuel cell system is mounted;
FIG. 2 is an explanatory diagram illustrating the configuration of the fuel cell system;
FIG. 3 is an explanatory diagram illustrating the configuration of an air supply path; and
FIG. 4 is an explanatory diagram illustrating how the air supply path is damaged in the event of a vehicle collision.

### DETAILED DESCRIPTION

### A. First Embodiment:

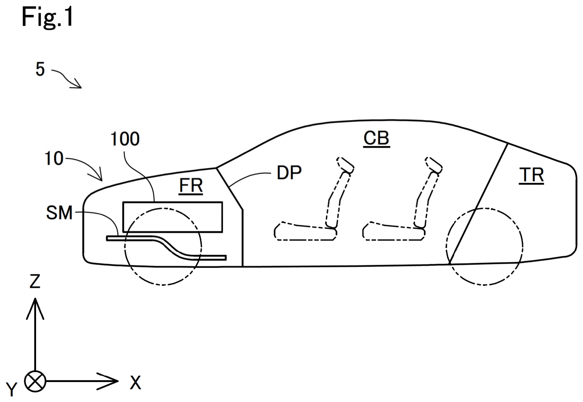

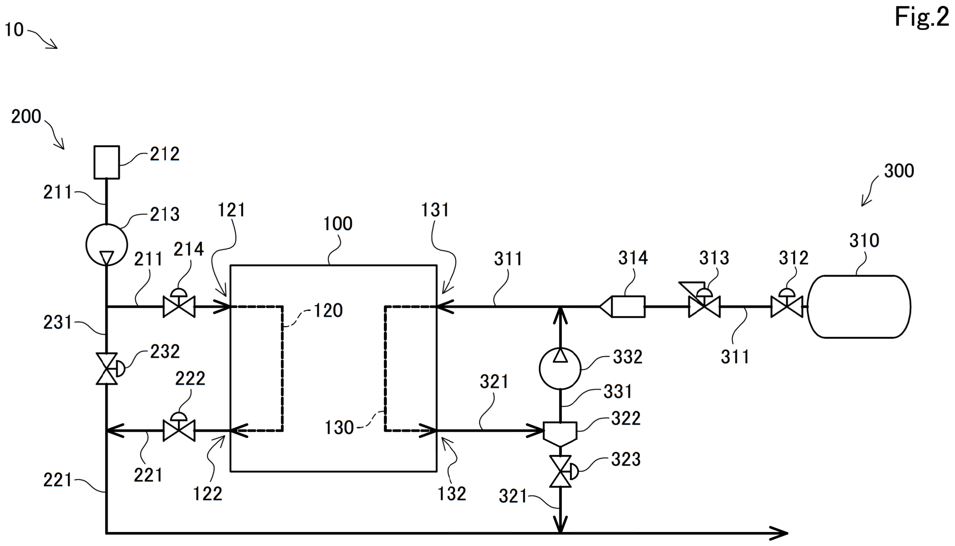

FIG. 1 is an explanatory diagram illustrating a vehicle 5 on which a fuel cell system 10 of a first embodiment is mounted. FIG. 2 is an explanatory diagram illustrating the configuration of the fuel cell system 10. As illustrated in FIG. 1, the fuel cell system 10 is mounted on the vehicle 5. In the present embodiment, the vehicle 5 has a front room FR, a cabin CB, and a trunk room TR. The front room FR is disposed at a front end portion of the vehicle 5, the cabin CB is disposed at the center of the vehicle 5, and the trunk room TR is disposed at a rear end portion of the vehicle 5. The vehicle 5 includes a suspension member SM disposed in the front room FR, and a dash panel DP that partitions the front room FR from the cabin CB. A fuel cell 100 is disposed in the front room FR. The fuel cell 100 is fixed onto the suspension member SM. An occupant boards the cabin CB.

As illustrated in FIG. 2, the fuel cell system 10 includes the fuel cell 100, an air supply and exhaust system 200, and a hydrogen supply and exhaust system 300. The fuel cell 100 generates electricity by being supplied with anode gas and cathode gas. In the present embodiment, the fuel cell 100 is a polymer electrolyte fuel cell, with the anode gas being hydrogen, and the cathode gas being air containing oxygen. The fuel cell 100 has a stack structure in which a plurality of single cells is stacked. In the present embodiment, the fuel cell 100 has an output voltage of 300 V or higher. The electric power generated by the fuel cell 100 is supplied to a running motor (not illustrated) that generates propulsion for the vehicle 5.

The fuel cell 100 includes a cathode internal flow path 120 through which air is supplied to the cathode of each single cell and an anode internal flow path 130 through which hydrogen is supplied to the anode of each single cell. The fuel cell 100 has an air supply port 121 through which air is introduced from the outside into the cathode internal flow path 120 and an air discharge port 122 through which the used air is discharged from the cathode internal flow path 120 to the outside. The fuel cell 100 has a hydrogen supply port 131 through which hydrogen is introduced from the outside into the anode internal flow path 130 and a hydrogen discharge port 132 through which the used hydrogen is discharged from the anode internal flow path 130 to the outside. Note that the air supply port 121 may be referred to as a cathode gas supply port, and the air discharge port 122 may be referred to as a cathode gas discharge port. Note that the hydrogen supply port 131 may be referred to as an anode gas supply port, and the hydrogen discharge port 132 may be referred to as an anode gas discharge port.

The air supply and exhaust system 200 supplies the air to the air supply port 121 of the fuel cell 100 and discharges the air exiting from the air discharge port 122 to the outside of the fuel cell system 10. In the present embodiment, the air supply and exhaust system 200 includes an air supply path 211, an air cleaner 212, a compressor 213, an air supply valve 214, an air discharge path 221, an air discharge valve 222, a bypass path 231, and a bypass valve 232.

An upstream end portion of the air supply path 211 communicates with the atmosphere, while a downstream end portion of the air supply path 211 communicates with the air supply port 121 of the fuel cell 100. In the air supply path 211, the air cleaner 212, the compressor 213, and the air supply valve 214 are provided in this order from the upstream side thereof. The air cleaner 212 collects foreign matter in the air. The compressor 213 pumps the air toward the downstream side. The air supply valve 214 adjusts the flow rate of air supplied to the air supply port 121.

An upstream end portion of the air discharge path 221 communicates with the air discharge port 122 of the fuel cell 100, while a downstream end portion of the air discharge path 221 communicates with the atmosphere. The air discharge path 221 is provided with the air discharge valve 222. The air discharge valve 222 adjusts the flow rate of air discharged from the air discharge port 122.

The bypass path 231 is a flow path for discharging air from the air supply path 211 to the air discharge path 221 without allowing the air to pass through the fuel cell 100. An upstream end portion of the bypass path 231 communicates with a portion of the air supply path 211 between the compressor 213 and the air supply valve 214, while a downstream end portion of the bypass path 231 communicates with a portion of the air discharge path 221 between the air discharge valve 222 and the downstream end portion. The bypass path 231 is provided with the bypass valve 232. The bypass valve 232 adjusts the flow rate of air passing through the bypass path 231. Note that the air supply and exhaust system 200 may not include the bypass path 231 and the bypass valve 232.

The hydrogen supply and exhaust system 300 supplies the hydrogen to the hydrogen supply port 131 of the fuel cell 100 and discharges the hydrogen exiting from the hydrogen discharge port 132 of the fuel cell 100 to the outside of the fuel cell system 10. In the present embodiment, the hydrogen supply and exhaust system 300 includes a hydrogen tank 310, a hydrogen supply path 311, a tank valve 312, a regulator 313, an injector 314, a hydrogen discharge path 321, a gas-liquid separator 322, a hydrogen discharge valve 323, a hydrogen circulation path 331, and a hydrogen pump 332.

Hydrogen is stored in the hydrogen tank 310. An upstream end portion of the hydrogen supply path 311 communicates with the hydrogen tank 310, while a downstream end portion of the hydrogen supply path 311 communicates with the hydrogen supply port 131 of the fuel cell 100. In the hydrogen supply path 311, the tank valve 312, the regulator 313, and the injector 314 are provided in this order from the upstream side thereof. The tank valve 312 adjusts the flow rate of hydrogen released from the hydrogen tank 310. The regulator 313 reduces the pressure of the hydrogen supplied from the tank valve 312 to the injector 314. The injector 314 adjusts the flow rate of hydrogen supplied to the hydrogen supply port 131.

An upstream end portion of the hydrogen discharge path 321 communicates with the hydrogen discharge port 132 of the fuel cell 100, while a downstream end portion of the hydrogen discharge path 321 communicates with a portion of the air discharge path 221, which is disposed downstream of a connection portion thereof with the bypass path 231. In the hydrogen discharge path 321, the gas-liquid separator 322 and the hydrogen discharge valve 323 are provided in this order from the upstream side thereof. The gas-liquid separator 322 separates water from the hydrogen discharged from the fuel cell 100. The hydrogen discharge valve 323 adjusts the flow rates of hydrogen and water discharged from the gas-liquid separator 322 to the air discharge path 221.

An upstream end portion of the hydrogen circulation path 331 communicates with the gas-liquid separator 322, while a downstream end portion of the hydrogen circulation path 331 communicates with a portion of the hydrogen supply path 311 between the injector 314 and the hydrogen supply port 131 of the fuel cell 100. The hydrogen circulation path 331 is provided with the hydrogen pump 332. The hydrogen pump 332 pumps the hydrogen to the hydrogen supply path 311. The hydrogen supplied by the hydrogen pump 332 to the hydrogen supply path 311 is reused to generate electricity in the fuel cell 100.

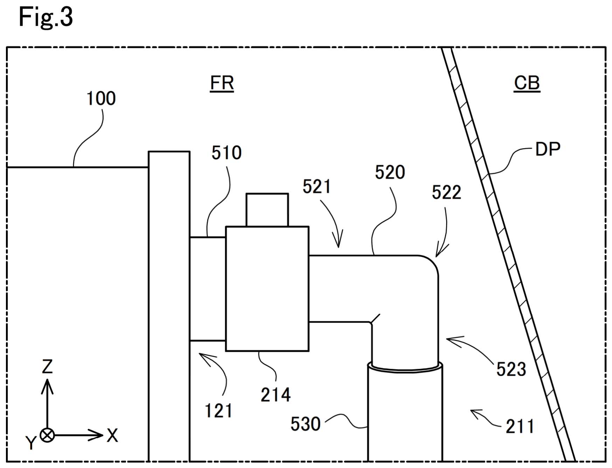

FIG. 3 is an explanatory diagram illustrating the configuration of the air supply path 211. In the present embodiment, the air supply path 211 includes a first pipe 510, a second pipe 520, and a third pipe 530. The first pipe 510, the second pipe 520, and the third pipe 530 are disposed in the front room FR of the vehicle 5. More specifically, the first pipe 510, the second pipe 520, and the third pipe 530 are disposed between the fuel cell 100 and the dash panel DP.

One end of the first pipe 510 is connected to the air supply port 121 of the fuel cell 100. The first pipe 510 has a cylindrical outer appearance. The first pipe 510 is disposed parallel to the front-back axis (X-axis) of the vehicle 5. The first pipe 510 is formed of a metallic material. In the present embodiment, the first pipe 510 is formed of an aluminum alloy. The air supply valve 214 is connected to the other end of the first pipe 510. The air supply valve 214 has a casing formed of a metallic material. In the present embodiment, the casing of the air supply valve 214 is formed of an aluminum alloy.

One end of the second pipe 520 is connected to the air supply valve 214. In other words, the second pipe 520 is connected to the air supply port 121 of the fuel cell 100 via the first pipe 510 and the air supply valve 214. The fuel cell 100, the first pipe 510, the air supply valve 214, the second pipe 520, and the dash panel DP are arranged in this order along the front-back axis of the vehicle 5. The third pipe 530 is connected to the other end of the second pipe 520. The second pipe 520 is formed of a hard resin material. As used herein, "having the hardness" means that it does not have rubber elasticity. The material of the second pipe 520 has a lower fracture strength than the material of the first pipe 510. The material of the second pipe 520 has at least a tensile strength and a compressive strength that are lower than those of the material of the first pipe 510. Examples of the material usable for the second pipe 520 include polypropylene (PP), polyethylene (PE), acrylonitrile butadiene styrene (ABS), polyamide (PA), and polyoxymethylene (POM). In the present embodiment, the plate thickness of the second pipe 520 is substantially the same as that of the first pipe 510. The plate thickness of the second pipe 520 is preferably equal to or less than twice the plate thickness of the first pipe 510.

The second pipe 520 has a first straight portion 521, a bent portion 522, and a second straight portion 523. The first straight portion 521 and the second straight portion 523 are portions of the second pipe 520, each having a cylindrical outer appearance. The bent portion 522 is a portion of the second pipe 520 having an outer appearance in which a portion of the cylindrical shape is bent. In the present embodiment, the bent portion 522 is bent at 90 degrees. The first straight portion 521 is located at one end of the second pipe 520. The first straight portion 521 is disposed parallel to the front-back axis of the vehicle 5. The second straight portion 523 is located at the other end of the second pipe 520. The second straight portion 523 is disposed parallel to the up-down axis (Z-axis) of the vehicle 5. The bent portion 522 is disposed between the first straight portion 521 and the second straight portion 523. One end of the bent portion 522 is connected to the first straight portion 521, while the other end of the bent portion 522 is connected to the second straight portion 523. The first straight portion 521 is connected to the air supply valve 214, and the second straight portion 523 is connected to the third pipe 530. Air having flowed into the air supply path 211 from the air cleaner 212 flows inside the second pipe 520 through the second straight portion 523, the bent portion 522, and the first straight portion 521 in this order.

The bent portion 522 is disposed facing a body structure member of the vehicle 5. In the present embodiment, the bent portion 522 is disposed facing the dash panel DP. The dash panel DP is formed of a metallic material. In the present embodiment, the dash panel DP is formed of steel. The dash panel DP is the body structure member that partitions the front room FR from the cabin CB and is configured so as not to be easily deformed upon a collision of the vehicle 5. The material of the dash panel DP has a fracture strength higher than that of the material of the second pipe 520. The material of the dash panel DP has at least a tensile strength and a compressive strength that are higher than those of the material of the second pipe 520. The distance between the second pipe 520 and the fuel cell 100 is larger than the distance between the first pipe 510 and the fuel cell 100. In the present embodiment, among the first pipe 510, the air supply valve 214, the first straight portion 521, and the bent portion 522, the bent portion 522 is located farthest from the fuel cell 100. The distance between the second pipe 520 and the dash panel DP is smaller than the distance between the first pipe 510 and the dash panel DP. In the present embodiment, among the first pipe 510, the air supply valve 214, the first straight portion 521, the bent portion 522, and the second straight portion 523, the bent portion 522 is located closest to the dash panel DP.

One end of the third pipe 530 is connected to the second pipe 520. In other words, the third pipe 530 is connected to the air supply port 121 of the fuel cell 100 via the first pipe 510, the air supply valve 214, and the second pipe 520. The compressor 213 is connected to the other end of the third pipe 530. In the present embodiment, the third pipe 530 is formed of a rubber material. However, like the second pipe 520, the third pipe 530 may be formed of a hard resin material.

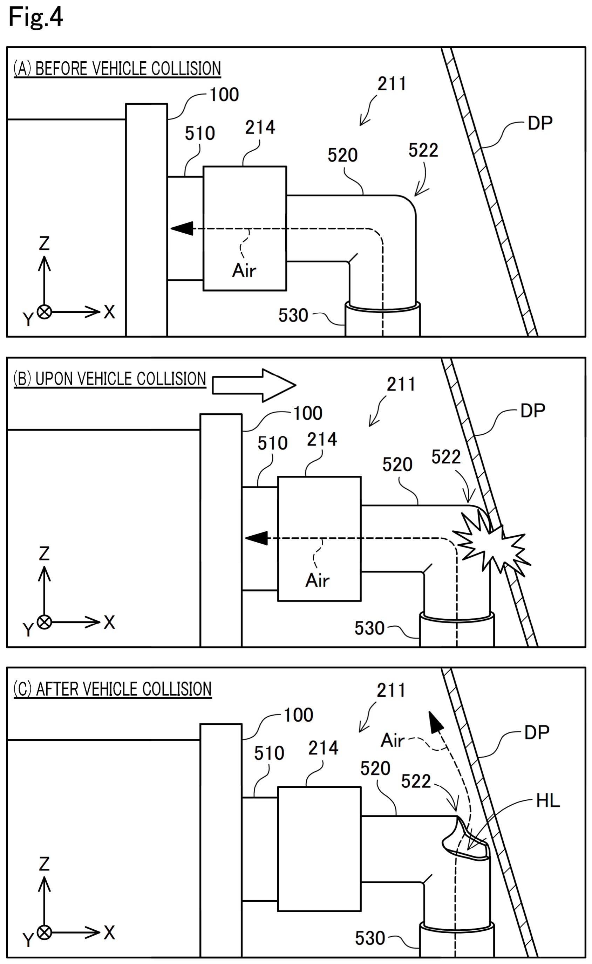

FIGS. 4(A), 4(B), and 4(B) are explanatory diagrams illustrating how the air supply path 211 is damaged upon a front-end collision of the vehicle 5. In FIG. 4, the flow of air having flowed from the air cleaner 212 into the air supply path 211 is represented by a dashed arrow. As shown in FIG. 4(A), before a vehicle collision, the air having flowed in from the air cleaner 212 flows into the fuel cell 100 through the third pipe 530 made of rubber, the second pipe 520 made of resin, the air supply valve 214, and the first pipe 510 made of metal.

As illustrated in FIG. 4(B), upon the vehicle collision, the front room FR of the vehicle 5 is crushed. The fuel cell 100 is pushed by the body structure member forming the front end portion of the front room FR and thereby moves rearward. At this time, the first pipe 510, the air supply valve 214 and the second pipe 520 are pushed by the fuel cell 100 and thereby move rearward. The dash panel DP is the body structure member that partitions the front room FR from the cabin CB and is thus not easily deformed upon the vehicle collision. Since the bent portion 522 of the second pipe 520 in the air supply path 211 is closest to the dash panel DP, the bent portion 522 first collides with the dash panel DP. When the bent portion 522 collides with the dash panel DP, a load is applied to the first pipe 510, the air supply valve 214, and the second pipe 520, which are sandwiched between the fuel cell 100 and the dash panel DP. The load applied upon the vehicle collision causes damage to the bent portion 522.

As illustrated in FIG. 4(C), after the vehicle collision, a hole HL is formed in the damaged bent portion 522. If the compressor 213 is not stopped after the vehicle collision, air flows from the air cleaner 212 into the air supply path 211. Even if the compressor 213 is stopped after the vehicle collision, air may flow from the air cleaner 212 into the air supply path 211 due to wind blowing outside the vehicle 5. Here, when the air having flowed in from the air cleaner 212 reaches the cathode internal flow path 120 of the fuel cell 100 after the vehicle collision, the fuel cell 100 generates electricity using the air flowing into the cathode internal flow path 120 and the hydrogen flowing or remaining in the anode internal flow path 130, whereby the voltage between the terminals of the fuel cell 100 becomes high. For example, if the voltage between the terminals of the fuel cell 100 reaches 60 V or higher, a worker may receive an electric shock upon post-collision handling of the vehicle 5. However, in the present embodiment, when the air supply valve 214 is closed after the vehicle collision, the air having flowed into the air supply path 211 from the air cleaner 212 flows out through the hole HL formed in the bent portion 522. Even when the air supply valve 214 is open after the vehicle collision, most of the air having flowed into the air supply path 211 from the air cleaner 212 flows out of the air supply path 211 through the hole HL formed in the bent portion 522. This is because the pressure loss in the cathode internal flow path 120 is greater than that in the hole HL formed in the bent portion 522, or because the air having flowed in from the air cleaner 212 is not bent at the bent portion 522 but goes straight toward the hole HL. Since the bent portion 522 is disposed in the front room FR, even if wind blows outside the vehicle 5, air is not easily to flow into the air supply path 211 through the hole HL formed in the bent portion 522.

According to the present embodiment described above, the fuel cell system 10 is configured to form the hole HL in the bent portion 522 of the second pipe 520 with high certainty upon a vehicle collision. Thus, this configuration is able to prevent air that has flowed in from the air cleaner 212 from reaching the cathode internal flow path 120 of the fuel cell 100 after the vehicle collision. Therefore, it is possible to avoid air from entering the cathode internal flow path 120 after the vehicle collision, thereby preventing the voltage between the terminals of the fuel cell 100 from becoming high.

Here, in other forms where the first pipe 510 and the second pipe 520 are formed of a resin material, the load input to the second pipe 520 from the dash panel DP upon a vehicle collision tends to be dispersed due to the insufficient rigidity of the first pipe 510. However, in the present embodiment, the first pipe 510 is formed of a metallic material, while the second pipe 520 is formed of a resin material, thereby allowing the load input to the second pipe 520 from the dash panel DP to be easily concentrated thereon upon a vehicle collision.

The first pipe 510 and the second pipe 520 may be regarded collectively as a cantilever beam with the end of the first pipe 510 on the fuel cell 100 side serving as a fixed end and the bent portion 522 of the second pipe 520 serving as a free end. Upon a vehicle collision, a concentrated load is input from the dash panel DP to the bent portion 522. In a cantilever beam, the stress at the fixed end is higher than the stress at the free end. In other forms where the first pipe 510 and the second pipe 520 are made of the same material, the first pipe 510 is more likely to be damaged. However, in the present embodiment, the first pipe 510 is formed of a metallic material, while the second pipe 520 is formed of a resin material, whereby the fracture strength of the first pipe 510 is higher than that of the second pipe 520. In addition, the bent portion 522 of the second pipe 520 has a shape that is more prone to stress concentration than the first straight portion 521 and the second straight portion 523 of the second pipe 520. Thus, the bent portion 522 of the second pipe 520 is more likely to be damaged than the first pipe 510 upon a vehicle collision.

Even if a hole is formed in the first pipe 510 of a straightly cylindrical shape, air having flowed into the air supply path 211 from the air cleaner 212 is more likely to go straight through the first pipe 510 and to reach the cathode internal flow path 120 of the fuel cell 100. However, in the present embodiment, the hole HL is formed at the bent portion 522 of the bent cylindrical second pipe 520. Consequently, air having flowed into the air supply path 211 from the air cleaner 212 is more likely to go straight through the hole HL formed in the bent portion 522 without being bent at the bent portion 522, and to flow out of the air supply path 211.

In the present embodiment, the bent portion 522 of the second pipe 520 is disposed between the compressor 213 and the fuel cell 100. Thus, even if the compressor 213 is not stopped after a vehicle collision, air pumped from the compressor 213 is allowed to flow out of the air supply path 211 through the hole HL in the bent portion 522.

In the present embodiment, the fuel cell 100, the first pipe 510, the air supply valve 214, and the second pipe 520 are arranged in this order along the front-back axis of the vehicle 5, so that the bent portion 522 collides with the dash panel DP in the event of a vehicle collision. The dash panel DP is the body structure member that partitions the front room FR from the cabin CB, and is thus configured so as not to be easily deformed upon the vehicle collision. Therefore, this configuration enables the bent portion 522 to be damaged with a high degree of accuracy by causing the bent portion 522 to collide with the dash panel DP upon the vehicle collision.

### B. Other Embodiments:

(B1) In the fuel cell system 10 of the above embodiment, the first pipe 510 and the second pipe 520 are provided in the air supply path 211 that communicates with the air supply port 121 of the fuel cell 100. In contrast, the first pipe 510 and the second pipe 520 may be provided in the air discharge path 221 that communicates with the air discharge port 122 of the fuel cell 100. In such a case, when wind blows outside the vehicle 5 after a collision, it is possible to prevent the air from flowing into the cathode internal flow path 120 of the fuel cell 100 from the distal end of the air discharge path 221, which communicates with the atmosphere. Therefore, this configuration is also able to prevent the voltage between the terminals of the fuel cell 100 from becoming high after the vehicle collision.
(B2) In the fuel cell system 10 of the above embodiment, the first pipe 510 and the second pipe 520 are disposed in respective portions of the air supply path 211 between the compressor 213 and the fuel cell 100. In contrast, the first pipe 510 and the second pipe 520 may alternatively be disposed in respective portions of the air supply path 211 between the air cleaner 212 and the compressor 213. Even in such a case, after a vehicle collision, air having flowed in from the air cleaner 212 is allowed to flow out of the air supply path 211 through the hole HL formed in the second pipe 520.
(B3) In the fuel cell system 10 of the above embodiment, the fuel cell 100, the first pipe 510, and the second pipe 520 are disposed in the front room FR of the vehicle 5. In contrast, the fuel cell 100, the first pipe 510, and the second pipe 520 may alternatively be disposed in the trunk room TR of the vehicle 5. The fuel cell 100, the first pipe 510, the second pipe 520, and the body structure member that partitions the trunk room TR from the cabin CB may be arranged in this order along the front-back axis of the vehicle 5. In such a case, at the time of a rear-end collision of the vehicle 5, the bent portion 522 of the second pipe 520 is caused to collide with the body structure member that partitions the trunk room TR from the cabin CB, thereby enabling the bent portion 522 to be damaged.

The present disclosure is not limited to the above-described embodiments, and modifications may be made to implement various configurations without departing from the spirit of the disclosure. For example, the technical features described in the embodiments, which correspond to the technical features of the aspects described in the Summary section, may be replaced or combined as appropriate, in order to solve part or all of the above-described problems, or to achieve part or all of the above-described effects. Furthermore, unless a technical feature is described herein as being essential, it may be omitted as appropriate.

## Claims

1. A fuel cell system (10) to be mounted on a vehicle (5), comprising:
a fuel cell (100) having a cathode gas supply port (121) and a cathode gas discharge port (122), the cathode gas supply port introducing cathode gas, the cathode gas discharge port discharging the used cathode gas;
a first pipe (510) made of metal and communicating with the cathode gas supply port or the cathode gas discharge port; and
a second pipe (520) made of resin and communicating with the cathode gas supply port or the cathode gas discharge port via the first pipe, the second pipe having a bent portion (522) disposed farther from the fuel cell than the first pipe.

2. The fuel cell system according to claim 1, wherein
the first pipe communicates with the cathode gas supply port,
one end of the second pipe communicates with the cathode gas supply port via the first pipe, and
the other end of the second pipe communicates with a compressor (213) that pumps the cathode gas to the cathode gas supply port.

3. A vehicle (5) comprising:
a fuel cell (100) having a cathode gas supply port (121) and a cathode gas discharge port (122), the cathode gas supply port introducing cathode gas, the cathode gas discharge port discharging the used cathode gas;
a first pipe (510) made of metal and communicating with the cathode gas supply port or the cathode gas discharge port;
a second pipe (520) made of resin and communicating with the cathode gas supply port or the cathode gas discharge port via the first pipe, the second pipe having a bent portion (522) disposed farther from the fuel cell than the first pipe; and
a dash panel (DP), the dash panel partitioning a front room (FR) located at a front end portion of the vehicle from a cabin (CB) located behind the front room, wherein
the fuel cell, the first pipe, and the second pipe are disposed in the front room, and
the fuel cell, the first pipe, the second pipe, and the dash panel are arranged in this order along a front-back axis (X) of the vehicle.
